(19) **Europäisches Patentamt / European Patent Office / Office européen des brevets**

(11) **EP 4 749 274 A1**

(12) **EUROPEAN PATENT APPLICATION**

(43) Date of publication:
27.05.2026 Bulletin 2026/22

(51) International Patent Classification (IPC):
*G01N 27/04* (2006.01)   *G01N 27/22* (2006.01)
*B29B 9/16* (2006.01)   *B29B 13/06* (2006.01)

(21) Application number: 25217983.3

(22) Date of filing: 24.11.2025

(52) Cooperative Patent Classification (CPC):
**G01N 27/223; B29B 9/16; B29B 13/065;**
**G01N 27/043;** F26B 2200/08; G01N 27/048

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 22.11.2024 US 202463723609 P

(71) Applicant: **Novatec, Inc.**
**Baltimore, Maryland 21225 (US)**

(72) Inventor: **BESSEMER, Conrad**
**Millersville, 21108 (US)**

(74) Representative: **Harrison IP Limited**
**Mereside, Alderley Park**
**Congleton Road**
**Nether Alderley**
**Macclesfield, Cheshire SK10 4TG (GB)**

(54) **MOISTURE SENSORS FOR GRANULAR MATERIALS**

(57) Moisture sensors for measuring the moisture content of a sample of granular material can include a vibration generator that vibrates the sample to reduce inter-granular voids within the sample and increase the bulk density of the sample. The moisture sensors may include a weighing device that weighs the sample so that the actual bulk density of the sample can be calculated based on the actual weight of the sample, with the actual bulk density being used to determine the moisture content of the sample.

FIG. 1

## Description

## FIELD

This invention relates moisture sensing for granular materials.

## BACKGROUND

Sensors for determining the moisture content of granular materials, such as resin granulates, are known. Some types of moisture sensors, such as capacitive sensors, require knowledge of the bulk density of the granular material to determine the moisture content thereof. The bulk density value used in determining moisture content typically is an assumed value for the particular type of material being sampled, with the assumed value being provided by the material manufacturer or obtained from generally recognized standards. Variations in the actual bulk density of the sample from the assumed value, however, can adversely affect the accuracy of the moisture determination. These variations can be significant, for example, when some or all of the sample is made up of recycled or reclaimed granulates, which often have irregular shapes that introduce inter-granular voids that can cause the bulk density of the sample to deviate from the assumed value.

## SUMMARY

In one aspect of the disclosed technology, sensor for measuring the moisture content of a granular material includes a sensing unit defining a sensing volume for holding the granular material and configured to generate an output relating to the moisture content of the granular material within the sensing volume, and a vibration generator configured to vibrate the granular material within the sensing volume.

In another aspect of the disclosed technology, the vibration generator is configured to compact the granular material within the sensing volume by reducing inter-granular voids within the granular material within the sensing volume.

In another aspect of the disclosed technology, the vibration generator is configured to increase a bulk density of the granular material within the sensing volume.

In another aspect of the disclosed technology, the vibration generator includes a motor, and an eccentric weight connected to the motor, and the motor is configured to rotate the eccentric weight.

In another aspect of the disclosed technology, the sensing unit is configured to transmit the vibrations to the granular material within the sensing volume.

In another aspect of the disclosed technology, the vibration generator is located within the sensing unit.

In another aspect of the disclosed technology, the sensor further includes a weighing device configured to weigh the granular material within the sensing volume.

In another aspect of the disclosed technology, the weighing device includes a load cell.

In another aspect of the disclosed technology, the sensing unit includes a first electrode, and a second electrode located concentrically within the first electrode. The first and second electrodes define an annulus located between the first and second electrodes, and the annulus is the sensing volume.

In another aspect of the disclosed technology, the vibration generator is located within the second electrode.

In another aspect of the disclosed technology, the sensor further includes a support member. The first and second electrodes each have a generally cylindrical configuration, and the second electrode is mechanically connected to and supported by the first electrode via the support member.

In another aspect of the disclosed technology, the sensing unit further includes an oscillator circuit electrically coupled to the first and second electrodes and configured to generate a high-frequency alternating-current (AC) signal; a detection circuit electrically coupled to the first and second electrodes and configured to generate an output relating to a capacitance of the sensing unit; and an output circuit communicatively coupled to the detection circuit and configured to generate a signal indicative of the capacitance of the sensing unit.

In another aspect of the disclosed technology, system for drying a granular material includes a drying hopper. The drying hopper defines an interior volume configured to hold the granular material, an air inlet configured to facilitate the passage of dehumidified air into the interior volume, an entrance opening configured to facilitate entry of the granular material into the interior volume, and an exit. The system also includes the above sensor configured to measure the moisture content of the granular material.

In another aspect of the disclosed technology, the moisture sensor is configured to measure the moisture content of the granular material upstream of the entrance opening of the drying hopper.

In another aspect of the disclosed technology, the system further includes a controller communicatively coupled to the moisture sensor and configured to vary one or more of a temperature of the dehumidified air supplied to the interior volume, a humidity of the dehumidified air supplied to the interior volume, a flow-rate of the dehumidified air supplied to the interior volume, and a residence time of the granular material with the drying hopper, based on the measured moisture content of the granular material.

In another aspect of the disclosed technology, a method for determining moisture content of a sample of granular material includes providing a moisture sensor, placing the sample in proximity to the moisture sensor so that the moisture sensor generates an output relating to the moisture content of the sample, measuring a weight of the sample, calculating a bulk density of the sample based on a volume of the sample and the measured weight of the sample, and calculating the moisture content of the sample based at least in part on the output of the moisture sensor and the calculated bulk density of the sample.

In another aspect of the disclosed technology, the method further includes vibrating the sample to reduce inter-granular voids within the sample and increase a bulk density of the sample.

In another aspect of the disclosed technology, the method further includes vibrating the sample to reduce the inter-granular voids within the sample and increase a bulk density of the sample prior to capturing the output of the moisture sensor.

In another aspect of the disclosed technology, the moisture sensor is a capacitive sensor.

In another aspect of the disclosed technology, the moisture sensor includes a sensing unit. The sensing unit includes a first electrode, and a second electrode located concentrically within the first electrode, the first and second electrodes defining an annulus located between the first and second electrodes for holding the sample. The sending unit also includes an oscillator circuit electrically coupled to the first and second electrodes and configured to generate a high-frequency alternating-current (AC) signal, a detection circuit electrically coupled to the first and second electrodes and configured to generate an output relating to the capacitance of the sensing unit, and an output circuit communicatively coupled to the detection circuit and configured to generate a signal indicative of the capacitance of the sensing unit.

## BRIEF DESCRIPTION OF THE DRAWINGS

The following drawings are illustrative of particular embodiments of the present disclosure and therefore do not limit the scope of the present disclosure. Embodiments of the present disclosure will hereinafter be described in conjunction with the appended drawings, wherein like numerals denote like elements.

FIG. 1     is a diagrammatic, cutaway view of a drying system for granular materials;

FIG. 2     is a side view of a measurement probe of the system shown in FIG. 1;

FIG.     3 is a side view of the measurement probe shown in FIG. 2, taken from a perspective rotated 90 degrees from the perspective of FIG. 2;

FIG. 4     is a bottom view of the measurement probe shown in FIGS. 2 and 3;

FIG. 5     is a magnified cross-sectional view of the area designated "A" in FIG. 3;

FIG. 6     is a diagrammatic illustration of electrical and electronic components of the system shown in FIG. 1;

FIG. 7     is a diagrammatic, cutaway view of an alternative embodiment of the drying system shown in FIG. 1.

FIG. 8     is a perspective view of another alternative embodiment of the drying system shown in FIG. 1.

FIG. 9     is a top perspective, cross-sectional view of a moisture sensor of the system shown in FIG. 8;

FIG. 9A     is a diagrammatic view of a sensing unit of the moisture sensor shown in FIG. 9;

FIG. 10     is a cross-sectional view of a sensing probe of the system shown in FIG. 1;

FIG. 11     is a cross-sectional view of a humidity sensor and a condensation chamber of the sensing probe shown in FIG. 10;

FIG. 12     is a flow diagram depicting regulation of a drying process performed by the system shown in FIG. 8; and

FIG. 13     is a flow diagram depicting an initial setup of drying parameters and residence time based on the as-measured moisture content of resin granulates, for the system shown in FIG. 8.

## DETAILED DESCRIPTION

The inventive concepts are described with reference to the attached figures, wherein like reference numerals represent like parts and assemblies throughout the several views. The figures are not drawn to scale and are provided merely to illustrate the instant inventive concepts. The figures do not limit the scope of the present disclosure or the appended claims. Several aspects of the inventive concepts are described below with reference to example applications for illustration. It should be understood that numerous specific details, relationships, and methods are set forth to provide a full understanding of the inventive concepts. One having ordinary skill in the relevant art, however, will readily recognize that the inventive concepts can be practiced without one or more of the specific details or with other methods. In other instances, well-known structures or operation are not shown in detail to avoid obscuring the inventive concepts.

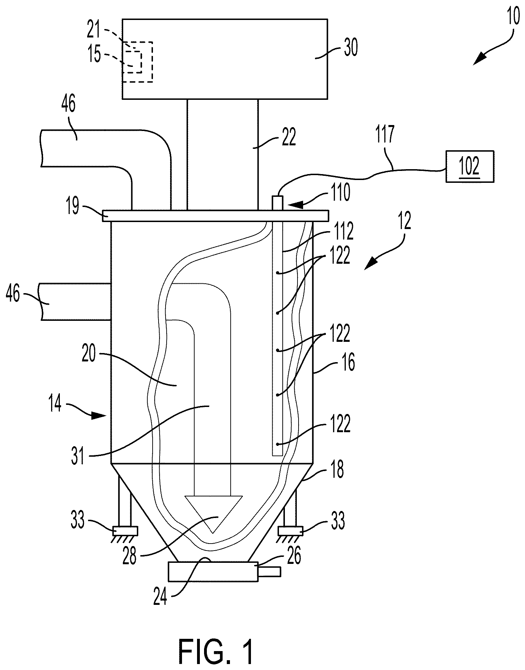

FIG. 1 depicts a system 10 for drying a granular material. The system 10 can be used to remove moisture from, for example, granulates of thermoplastic resin used in injection molding machines to manufacture plastic products. This particular application is disclosed for illustrative purposes only. The system 10, and alternative embodiments thereof, can be used to dry other types of granular materials including, for example, agricultural products such as grains. Also, the term "granular material," as used herein, is intended to encompass powdered materials including, without limitation, powered materials used in the pharmaceutical industry.

The system 10 includes a drying hopper 12. The drying hopper 12 is configured to hold the granular material, e.g., the resin granulates, in an interior volume 20 of the drying hopper 12, and to direct dry, heated process air over the resin granulates to remove moisture from the resin granulates. (The resin granulates are not shown in the figures, for clarity of illustration.)

The system 10 also includes a sensor array, in the form of a probe 110, that provides measurements of the temperature of the resin granulates, the dew point of the process air, and/or the moisture content of the resin granulates, at various vertical positions within the interior volume 20 of the drying hopper 12, so that the moisture content of the resin granulates within the interior volume 20 can be determined either indirectly from the temperature of the resin granulates and the dew point of the process air, or directly from the granular moisture sensors. After being dried in the drying hopper 12, the resin granulates can be transferred to a process machine, such an injection molding machine (not shown), that processes the granulates into plastic products.

The system 10 also includes a vacuum receiver 30 mounted above the drying hopper 12. The receiver 30 is depicted FIG. 1. The vacuum receiver 30 is connected to cover 19 of the drying hopper 12 by a feed mouth 22. The vacuum receiver 30 receives the resin granulates from a storage vessel (not shown) such as a Gaylord box, a container, a silo, a railcar, an octobin, etc. The receiver 30 holds the resin granulates until the drying hopper 12 requires the addition of resin granulates during the initial loading process, and during the drying cycle when the resin granulates within the drying hopper 12 need to be replenished as dried resin granulates are discharged from the drying hopper 12. The use of the system 10 in conjunction with the receiver 30 is disclosed for illustrative purposes only. The system 10 can be loaded directly from the storage vessel using a vacuum loader or other methodology.

The system 10 further includes a moisture sensor 15. The moisture sensor 15 is communicatively coupled to a controller 102. The moisture sensor 15 is located within an enclosure 21 within the receiver 30. The moisture sensor 15 is located upstream of the drying hopper 12, and measures the moisture content of the resin granulates entering the drying hopper 12. The moisture sensor 15 can be positioned at other locations upstream of the drying hopper 12, such as in or near the storage vessel, in alternative embodiments.

As discussed below, the controller 102 can be configured to modify the drying time, or residence time, of the resin granulates based on the initial moisture level as measured by the moisture sensor 15. More specifically, the controller 102 can be configured to increase the drying time from the manufacturer's recommended drying time if the as-measured moisture content is above a predetermined baseline level. Conversely, the controller 102 can be configured to decrease the drying time from the manufacturer's recommended drying time if the as-measured moisture content is below the baseline level. Alternative embodiments of the system 10 can be configured without the moisture sensor 15. In such alternative embodiments, the controller 102 will not perform the noted adjustment of the drying time based on the moisture content of the resin granulates entering the receiver 12.

The drying hopper 12 is positioned on, and is supported by a fixed support structure (not shown). The drying hopper 12 can be positioned on a mobile trolley in alternative embodiments. The drying hopper 12 is positioned over, or in close proximity to, the process machine, e.g., the injection molding machine, and supplies the resin granulates to the process machine on a selective basis.

Referring to FIG. 1, the drying hopper 12 comprises a body 14 having a cylindrical upper section 16, and a cone-shaped lower section 18 connected to the upper section 16. The drying hopper 12 also includes a lid or cover 19. The cover 19, and the upper and lower sections 16, 18 of the body 14 define the interior volume 20 of the drying hopper 12. The resin granulates reside in the interior volume 20 during the drying process. The drying hopper 12 also includes a feed mouth 22 mounted on the cover 19, and an output mouth 24 located at the bottom of the lower section 18.

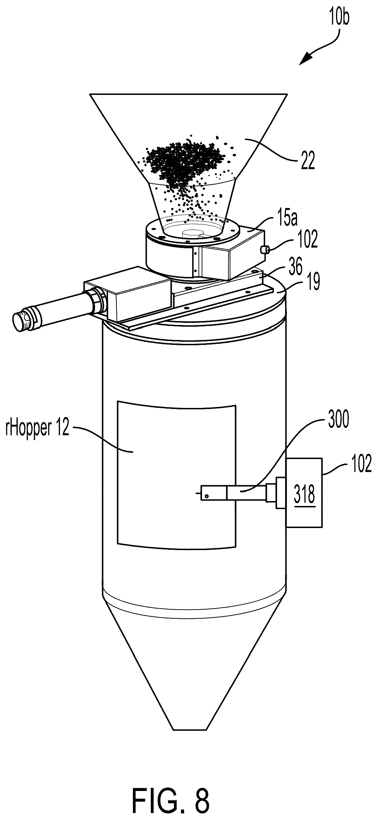

The system 10 further includes a slide gate valve 36 mounted the cover 19 (the slide gate valve 36 is depicted in that alternative embodiment of the system 10 shown in FIG. 8). The slide gate valve 36 includes a gate that is movable between and open and a closed position; and an actuator configured to move the gate between its open and closed positions. The moisture sensor 15 is mounted on the slide gate valve 36. The slide gate valve 36 is aligned with an opening (not shown) in the cover 19, so that the resin granulates can enter the interior volume 20 of the drying hopper 12 from the moisture sensor 15 via the slide gate valve 36 when the gate is in the open position. The moisture sensor 15, and any resin granulates residing therein, are isolated from the interior volume 20 when the gate is in the closed open position. The moisture sensor 15 can be located at other locations along the material path of the resin granulates in alternative embodiments.

The drying hopper 12 also includes an output mouth 24 located at the bottom of the lower section 18. The resin granulates exit the drying hopper 12 at the conclusion of the drying process by way of the output mouth 24. The drying hopper 12 also may include a discharge valve 26 located proximate the output mouth 22. The discharge valve 26 can be, for example, an electrically-actuated gate valve that moves between a closed position and an open position. When in the closed position, the discharge valve 26 covers the bottom of the output mouth 24, thereby preventing the resin granulates in the interior volume 20 from exiting the drying hopper 12. When in the open position, the discharge valve 26 allows the dried resin granulates to exit the drying hopper 12 by way of the output mouth 24. The resin granulates thus travel from the top to the bottom of the drying hopper 12 during the drying cycle. The dried resin granulates exiting the drying hopper 12 can drop, or be conveyed into the process machine. In alternative embodiments, a vacuum conveying control can be used in lieu of the discharge valve 26.

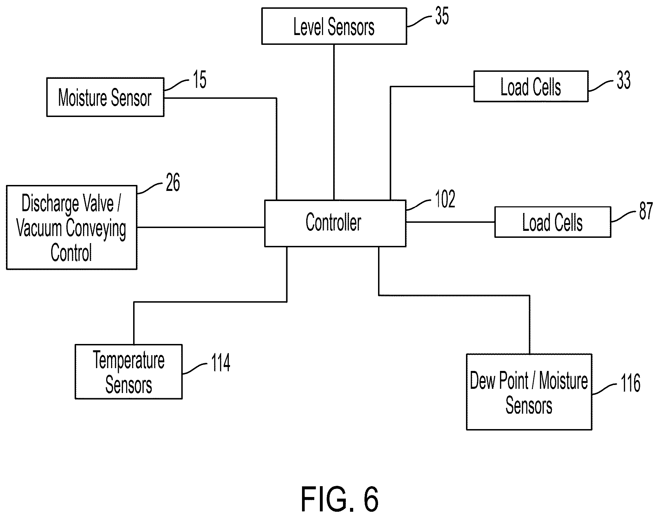

The discharge valve 26 (or vacuum conveying control) is communicatively coupled to a controller 102 of the system 10, as shown in FIG. 6. The controller 102 controls the discharge of the resin granulates from the drying hopper 12. In particular, the controller 102 is configured to generate inputs that cause the discharge valve 26 to open and close (or the vacuum conveying control to turn on and off) in response to user inputs, and when the controller 102 automatically determines that the resin granulates in the lower portion of the interior volume 20 have been subjected the drying process for the desired residence time and/or have reached a desired moisture content.

The drying hopper 12 also includes a diffuser 28, visible in FIG. 1. The diffuser 28 is suspended within the interior volume 20, proximate the bottom of the lower section 18 of the body 14, by an air/gas delivery duct 31. The air/gas delivery duct 31 directs heated and dry, e.g., typically -40°F dewpoint, process air to the diffuser 28. The diffuser 28 directs the process air outward, in a 360-degree pattern, so that the process air is distributed in a substantially symmetric pattern around the diffuser 28. The process air rises evenly through the interior volume 20, and passes over the resin granulates residing in the interior volume 20. Upon contacting the resin granulates, the process air removes moisture from the resin granulates. The process air eventually reaches the upper end of the interior volume 20, where the process air, now laden with moisture released from the resin granulates, exits the drying hopper 12 by way of a return duct 46.

The rate at which moisture removed from the resin granulates within the drying hopper 12 is dependent upon the operating parameters of the drying hopper 12, e.g., the dew point, volumetric flow rate, and temperature of the process air supplied to the drying hopper 12 via the air/gas delivery duct 31; and the residence time of the resin granulates within the drying hopper 12.

The drying hopper 12 also can include a weight sensing device in the form of, for example, one or more load cells 33 mounted between the body 14 and the support structure of the drying hopper 12. The load cells 33 are depicted in FIGS. 1 and 6. The load cells 33 are communicatively coupled to the controller 102, and generate outputs relating to the combined weight of the drying hopper 12 and its contents, i.e., the resin granulates residing within the drying hopper 12. The controller 102 is configured to calculate the combined weight of the drying hopper 12 and its contents based on the outputs of the load cells 33, and predetermined calibration data stored in the controller 102. The controller 102 can calculate the total weight of the resin granulates residing in the drying hopper 12 based on the combined weight of the drying hopper 12 and its contents, and the empty weight of the drying hopper 12. Alternative embodiments of the system 10 can be configured without the load cells 33.

The drying hopper 12 also includes one or more level sensors 35 mounted within the interior volume 20 of the body 14, or at other suitable locations on or proximate the body 14. The level sensors 35 are depicted in FIG. 6 (the level sensors are not depicted in FIG. 1, for clarity of illustration). The level sensors 35 can be, for example, level switches. The level sensors 35 are communicatively coupled to the controller 102, and generate outputs indicating the level of the resin granulates within the interior volume 20. Alternative embodiments of the drying hopper 12 can be configured without the level sensors 35. For example, alternative embodiments can be equipped with a sight gauge in lieu of the level sensors 35.

The controller 102 comprises a processor, such as a microprocessor; an internal bus; a memory communicatively coupled to the processor via the bus; computer-executable instructions stored in the memory; and an input-output interface communicatively coupled to the internal bus. The controller 102 can have other configurations in alternative embodiments. Also, the controller 102 can include additional components, a description of which is not necessary to an understanding of the disclosed technology.

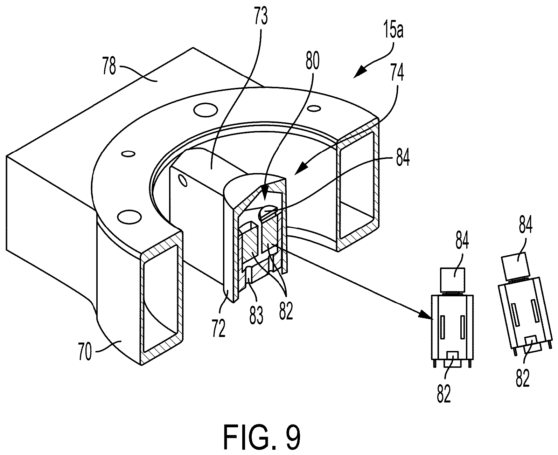

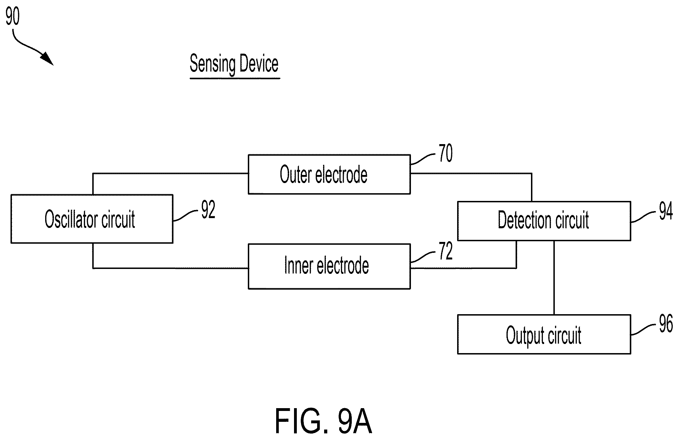

FIG. 8 depicts an alternative embodiment of the system 10 in the form of a system 10b. The system 10b includes a moisture sensor 15a. The moisture sensor 15a includes a sensing unit 90. The sensing unit 90 can include, for example, two electrically-conductive elements in the form of a first, or outer electrode 70; and a second, or inner electrode 72 shown in FIGS. 9 and 9A. The outer and inner electrodes 70, 72 each have a cylindrical configuration, and are formed from an electrically-conductive material. The inner electrode 72 is located concentrically within the outer electrode 70, so that the outer electrode 70 and the inner electrode 72 define an anulus 74 therebetween. The inner electrode 72 is mechanically connected to, and is supported by the outer electrode 70 by a support member 73.

Referring to FIG. 9A, the sensing unit 90 also includes an oscillator circuit 92 electrically coupled to the inner and outer electrodes 70, 72 and configured to generate a high-frequency alternating-current (AC) signal; a detection circuit 94 electrically coupled to the inner and outer electrodes 70, 72 and configured to measure the response of the sensing unit 90 to the signal generated by the oscillator circuit 92; and an output circuit 96 communicatively coupled to the detection circuit 94 and the controller 102 and configured to provide a signal to the controller 102 indicative of the capacitance of the sensing unit 90. The oscillator 92 circuit, detection circuit 94, and output circuit 96 are located in a housing 78 mounted on the outer electrode 72.

The moisture sensor 15a is mounted on the slide gate valve 36, and can be secured to the slide gate valve 36 by a suitable means such as fasteners. The moisture sensor 15a is positioned below the feed mouth 22, so that the annulus 74 is aligned with the feed mouth 22. The moisture sensor 15a is positioned on the slide gate valve 36 so that the annulus 74 aligns with the opening in the lid 19 of the drying hopper 12. The annulus 74 thus receives the resin granulates from the receiver 30 via the feed mouth 22, and the resin granulates pass though the annulus 74 while traveling from the receiver 30 to the interior volume 20 of the drying hopper 12 via the slide gate valve 36 and the associated opening in the cover 19 of the drying hopper 12. The moisture sensor 15a can be located at other locations along the material path of the resin granulates in alternative embodiments.

The annulus 74 acts a sensing volume for the moisture sensor 15a. More specifically, the outer and inner electrodes 70, 72, when energized by the oscillator circuit 92, produce an electric field within the annulus 74. When the annulus 74 is empty, the air within the annulus 74, which is located between the outer and inner electrodes 70, 72, acts as the dielectric in the capacitive circuit formed by the outer and inner electrodes 70, 72 and the contents of the annulus 74. When the annulus 74 is filled with the resin granulates, the resin granulates (including any moisture therein), and any air in the inter-granular voids between the resin granulates, act as the dielectric in the capacitive circuit.

The dielectric constant of the dielectric, i.e., the material within the annulus 74, affects the capacitance of the sensing unit 90, which in turn affects the response of the moisture sensor 15a to the energization thereof by the oscillator circuit 92. The dielectric constant of the granulate material is different than the dielectric constant of air. Thus, the presence of the resin granulates (and any moisture therein) within the annulus 74 alters the capacitance of the sensing unit 90, and the response of the sensing unit 90 to being energized, in relation to the capacitance of the sensing unit 90 when only air is present in the annulus 74.

During operation of the system 10b, resin granulates become disposed in the annulus 74 upon exiting the feed mouth 22. The moisture content of the resin granulates can be determined when the slide gate valve 36 is in its closed position, so that the resin granulates fill the annulus 74 and are in a static state, i.e., are not moving through the moisture sensor 15a. The capacitance of the sensing device 90 in response to being energized by the oscillator circuit 92 can be sensed by the detection circuit 94, which measures the output voltage of the sensing unit 90 and generates a corresponding output that is transmitted to the controller 102 by the output circuit 96. The controller 102 is configured to determine the moisture content of the resin granulates based on a predetermined relationship between at least the applied voltage; the output, or responsive voltage; and the type of the resin granulates (including the bulk density for the type of resin granulates, which can be provided by the resin manufacturer or obtained from generally recognized standards). The predetermined relationship between the above factors can be established based on data generated during a prior calibration, and stored in the controller 102.

The moisture sensor 15a also includes a vibration generator 80. The vibration generator 80 is configured to vibrate the resin granulates within the annulus 74, to increase the degree of compaction of resin granulates. Increasing the degree of compaction of the resin granulates reduces the inter-granular voids between the resin granulates, which increases the bulk density of the resin granulates within the annulus 74, which in turn lead to increased accuracy and consistency in the moisture measurements provided by the moisture sensor 15a.

In the below formula, $C_o$ represents the value of the capacitance of the moisture sensor 15a, in fF (femto Faradays), when the annulus 74 is empty, i.e., when no resin granulates are present in the annulus 74 and the annulus 15a contains only ambient air at room temperature. $C_{tot}$ represents the total value of the capacitance of the moisture sensor 15a when the annulus 74 is filled with the resin granulates. The following de-mixing formula can be based on the delta between these two capacitance measurements:

$$C_{material} = C_{tot} - C_o.$$

In general, roughly 90 percent of $C_{material}$ is due to the presence of the resin granules, and the remainder is due to the moisture in the resin granulates (the quantity to be measured) and the ambient humidity. Thus, it can be seen that the quantity of the resin granulates in the annulus 74 of the moisture sensor 15a, which determines the bulk density of the resin granulates within the annulus 74, should be as consistent as possible throughout the various moisture readings made by the moisture sensor 15a, especially in the case of recycled or reclaimed granulates, which typically do not have a regular shape.

The vibration generator 80 includes two electric motors 82, and two eccentric weights 84. The motors 82 are fixed to a mount 83 located within the inner electrode 72. The motors 82 can be mounted at other locations within the moisture sensor 15a in alternative embodiments. Each weight 84 is mounted on an output shaft of a respective one of the motors 82. The motors 82 can be electrically connected to a relay 86 located within the housing 78. The relay 86 can be communicatively coupled to the controller 102, so that the motors 82 can be activated and deactivated via the relay 86, in response to inputs from the controller 102. The vibrations generated by the rotating eccentric weights 84 are transmitted to the resin granulates within the annulus 74 by way of the inner electrode 72, the support member 73, and the outer electrode 70. The vibration of the resin granulates reduces the inter-granular voids between the resin granulates, further compacting the resin granulates and increasing the bulk density of the resin granulates. The motors 82 can be configured to rotate at, for example, about 4,000 rpm to about 6,000 rpm.

As the resin granulates compact, additional resin granulates can move into the annulus 74 from the feed mouth 22, so that the annulus 74 remains full. Once the resin granulates have been subjected to the vibrations for a time interval sufficient to help ensure that the resin granulates have been sufficiently compacted, the oscillator circuit 75 can be energized to commence the measurement of the moisture content of the resin granulates as discussed above.

Compacting the resin granulates prior to each moisture measurement helps to maintain consistency in the actual bulk density of the sample of resin granulates within the annulus 74 from measurement to measurement, and also helps to ensure that the actual bulk density of the samples is consistent with the predetermined assumed value for bulk density used in the moisture calculation. Maintaining consistency between the actual bulk density of the samples with respect to each other, and with respect the assumed value, can increase the consistency and accuracy of the moisture measurements obtained using the moisture sensor 15a. These increases can be particularly significant when some, or all of the granulates in the sample are recycled or reclaimed material granulates, which typically do not have a regular shape. Without compaction, the irregular shape of these granulates can affect the net volume of the intergranular voids within the sample, causing the bulk density of the sample to depart from the assumed standard value upon which the moisture calculation is being based.

The vibration generator 80 can have configurations other than the two electric motors 82 in alternative embodiments. For example, the vibration generator 80 can be configured with one or more that two electric motors, a piezoelectric device, a coil and magnet, an ultrasound device, a source of pressurized air, or other devices that vibrate the resin granulates to increase the compaction action thereof, in lieu of, or in addition to, the two electric motors 82.

The moisture sensor 15a optionally can include a weighing device configured to weigh the sample of resin granulates located within the annulus 74. In such embodiments, the actual bulk density of the sample can be calculated from the measured weight and the known volume of the annulus 74. The actual bulk density can be used in the moisture calculation based on the reading from the moisture sensor 15a, further increasing the accuracy of the moisture level readings obtained from the moisture sensor 15a.

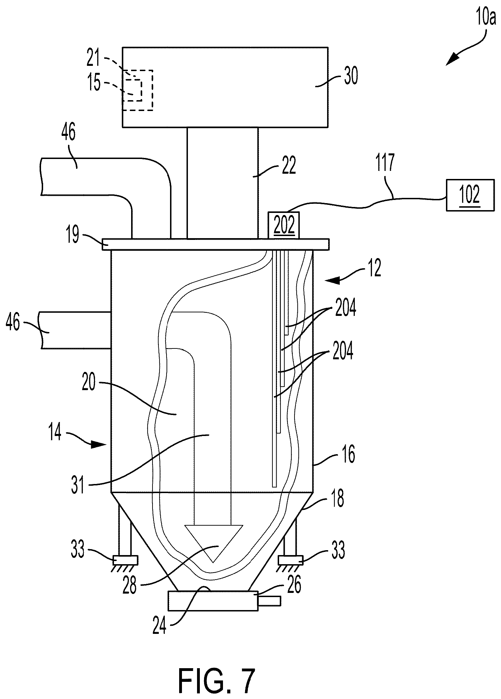

The weighing device can be, for example, a load cell 87 configured and supported so that the weight of the sample of resin granulates within the annulus 74 acts on the load cell 87 and causes the load cell 87 to generate an output proportional to the weight of the resin granulates acting thereon. The moisture sensor can have a lower wall or floor that can be moved into and out of a position at which the lower wall covers the lower end of the annulus 74 and thus supports the sample of resin granulates added to the annulus 74 after the lower end of the annulus 74 has been covered. The resin granulates can act on the load cell 87 directly, or via a flexible membrane that covers the load cell 87. The load cell 87 is depicted diagrammatically in FIG. 7.

The moisture sensor incorporating the load cell 87 also can include a sensor configured to sense the level of the resin granulates within the annulus 74. The level, which can change as the resin granulates are compacted by the vibration generator 80, can be used in combination with the weight of the sample to calculate the actual bulk density of the sample once the resin granulates have been fully compacted. In the alternative, resin granulates can be added to the annulus 74 as the resin granulates are compacted, to maintain a predetermined level of the resin granulates within the annulus 74.

The use of the measured weight and volume of a sample of resin granulates to calculate the actual bulk density of the sample, and calculating the moisture level within the sample using the actual bulk density and the output of the moisture sensor 15a, can be applied to moisture sensors other than capacitance-type sensors such as the moisture sensor 15a.

The above description of the moisture sensor 15a is presented for illustrative purposes only. The moisture sensor 15a can have other configurations in alternative embodiments of the system 10b. The example, the vibration generator 80, and alternative embodiments thereof, can be used in capacitive moisture sensors having a configuration other than an inner electrode located concentrically within an outer electrode; and in moisture sensors other than capacitive sensors. Also, the moisture sensor 15a can be used to determine the moisture content of granular materials other than resin granulates used in plastics manufacturing.

Referring to FIGS. 1-5, the probe 110 comprises a body 112, a first plurality of sensors 114, and a second plurality of sensors 116 (as noted below, alternative embodiments of the probe 110 can include as few as one sensor 114 and as few as one sensor 116). The sensors 114, 116 are housed withing the body 112. The probe 110 is configured to be disposed within the interior volume 20 of the drying hopper 12. For example, the probe 110 can be suspended from the cover 19 of the drying hopper 12 as depicted in FIG. 1. In alterative embodiments, the probe 110 can be suspended from the upper section 16 of the body 14 of the drying hopper 12. In other alterative embodiments, the probe 110 can be supported from below by the lower section 18 of the body 14.

The sensors 114 are temperature sensors. In some embodiments, the sensors 116 can be ' dew point sensors. In such embodiments, the probe 110 is configured to measure the temperature of the resin granulates and the dew point of the process air at various vertical locations within the interior volume 20, and the moisture content of the resin granulates is determined indirectly, based on a predetermined correlation between the measured temperature and dew point of the process air.

In other embodiments, the sensors 116 can be moisture sensors that directly measure the moisture content of the resin granulates.

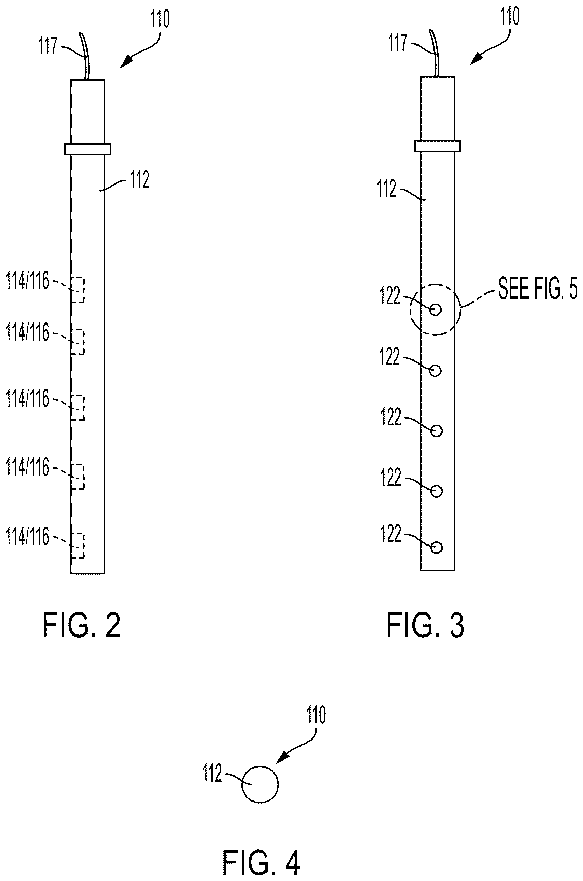

The sensors 114 and the sensors 116 can be positioned in conveniently-spaced locations along the length of the probe 110 as can be seen in FIG. 4, so that the moisture content of the resin granulates can be determined at various vertical locations within the interior volume 20. For example, the probe 110 can be equipped with four of each type of sensor 114, 116. Each sensor 114 can be spaced from its adjacent sensor(s) 114 by about 12 inches (about 30 cm). Each sensor 116 likewise can be spaced from its adjacent sensor(s) 116 by about 12 inches (about 30 cm). The above values for the number and spacing of the sensors 114, 116 are presented for illustrative purpose only, and can vary in alternative embodiments. The optimal number and spacing of the sensors 114, 116 are application-dependent, and can vary with factors such as the geometry of the drying hopper 12, the targeted granulate moisture profile within the drying hopper 12, etc. Alternative embodiments of the probe 110 can be equipped with less, or more than four sensors 114, and with less, or more than four sensors 114. For example, one possible alternative embodiment of the probe 110 can include as few as one sensor 114 and one sensor 116. Also, spacing between adjacent sensors 114 can be non-uniform, and the spacing between adjacent sensors 116 can be non-uniform in alternative embodiments. Also, in embodiments where the sensors 116 are moisture sensors, the probe 110 optionally can be configured without the sensors 114. In other alternative embodiments, the probe 110 can include both dew point sensors and granular moisture sensors, i.e., the probe 110 can include a third set of sensors so that the probe can directly measure the dew point of the process air, and the temperature and moisture content of the resin granulates.

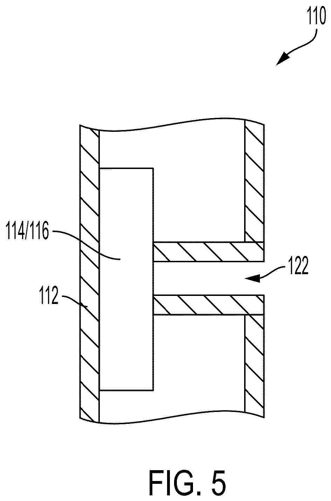

As shown in FIG. 5, each sensor 114 can be co-located with an associated sensor 116 within a common housing with within the body 112, and the pair of sensors 114, 116 can be in fluid communication with the interior volume 20 of the drying hopper 12 by way of an associated common passage 122. In embodiments where the sensors 116 are moisture sensors, the passages 122 also can act as sampling chambers for the sensors 116. The sensors 114, 116 can be housed separately within the body 112 in alternative embodiments of the probe 110.

The lowermost pair of sensors 114, 116 can be located, for example, at a height, or vertical position, that corresponds approximately with the vertical position of the interface between the upper section 16 and the lower section 18 of the drying hopper 12, as shown in FIG. 1. The uppermost pair of sensors 114, 116 can be located at a height that is far enough below the top of the drying hopper 12 to ensure that the uppermost sensors 114, 116 are immersed in the resin granulates throughout the normal range of operating condition of the drying hopper 12.

Each of the sensors 114 and sensors 116 are communicatively coupled to the controller 102 by a respective wired connection 117. The sensors 114, 116 can be communicatively coupled to the controller 102 by a suitable wireless connection in alternative embodiments.

The body 112 can be formed from a material suitable for use in the high temperatures that occur within the interior volume 20 of the drying hopper 12. For example, the body 112 can be formed from aluminum or stainless steel. The body 112 can be formed from other materials in the alternative. The body 112 can have a cylindrical configuration as shown in FIGS. 2-4. The body 112 can have other configurations in alternative embodiments.

In embodiments where the sensors are dew-point sensors, the sensors 116 can be configured as polymer-type dew point sensors. Other types of dew point sensors, such as metal-oxide sensors, quartz-crystal microbalance (QCM) sensors, chilled mirror sensors, etc., can be used in the alternative.

In embodiments where the sensors 116 are moisture sensors, the sensors 116 can be configured as capacitive moisture sensors. Other types of moisture sensors, such as microwave-based sensors, non-dispersive infrared sensors, etc., can be used in the alternative.

The sensors 114 can be configured as resistance temperature detectors (RTDs). The sensors 114 can be configured as other types of temperature sensors, such as thermistors, thermocouples, infrared sensors, IC temperature sensors, negative temperature coefficient (NTC) sensors, etc., in the alternative.

The probe 110 is immersed in the resin granulates residing in the interior volume 20 during the drying operation. The sensors 114 thus measure the approximate temperature of the resin granulates within the interior-volume 20 at the different locations along the length of the probe 110. In embodiments where the sensors 116 are dew point sensors, the sensors 116 measure the inter-granular dew point of the air within the interior-volume 20, i.e., the sensors 116 measure the dew point of the air in the interstices between the resin granulates at the different locations along the length of the probe 110. In embodiments where the sensors 116 are granular moisture, the sensors 116 directly measure the moisture content of the resin granulates at the different locations along the length of the probe 110.

Alternative embodiments of the probe 110 can be configured as two separate probes, with one probe housing the sensors 114 and the other probe housing the sensors 116. In other alternative embodiments, each of the sensors 114, 116 can be mounted individually on an interior or exterior surface or surfaces of the drying hopper 12, without being mounted on or in a separate housing or mounting structure such as body 112. In other alternative embodiments, all of the sensors 114, 116 can be located within a common housing that is located outside of the interior volume 20 of the drying hopper 12.

For example, FIG. 7 depicts an alternative embodiment in the form of a system 10a in which the sensors 114, 116 are located within a housing 202 configured for mounting outside of the interior volume 20 of the drying hopper 12. The system 10a otherwise can be substantially the same as the system 10. The sensors 114, 116 are in fluid communication with the interior volume 20 by way of conduits 204. The conduits 204 can be tubes, pipes, and other structures that can place the sensors 114, 116 in fluid communication with the interior volumes 20. Each conduit 204 is associated with one pair of sensors 114, 116. The conduits 204 have different lengths, so that the respective ends or entrances to the conduits 204 are located at the various levels within the interior volume 20 at which the temperature and dew point/granular-moisture measurements are to be acquired.

In embodiments where the sensors 116 are dew point sensors, the controller 102 can be configured to indirectly determine the moisture content of the resin granulates at the various sensing levels within the interior volume 20, based on the temperature and dew-point measurements from the respective temperature sensors 114 and dew-point sensors 116. In particular, the controller 102 can be programmed with a predetermined correlation between the moisture content of the resin granulates, and the temperature of the resin granulates and the interstitial dew point of the air within the interior volume 20. The controller 102 can be configured to determine the moisture content of the resin granulates based on this correlation, and the data acquired from the sensors 114, 116.

In embodiments where the sensors 116 are moisture sensors, the controller 102 can be configured to directly determine the moisture content of the resin granulates at the various sensing levels within the interior volume 20, based on the granular moisture measurements provided by the sensors 116.

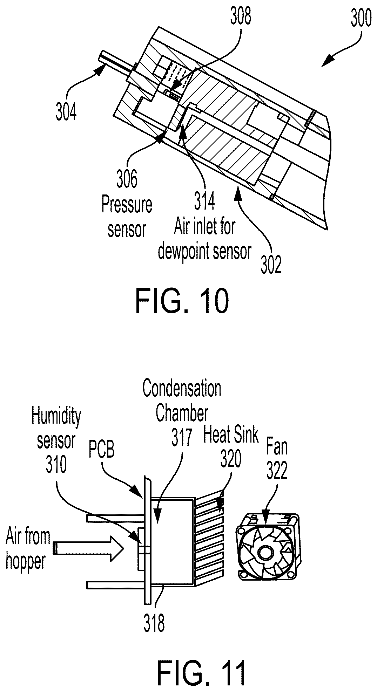

FIG. 10 depicts an alternative embodiment of the probe 110 in the from of a probe 300 incorporated into the system 10b. The probe 300 includes a sensor head 302. The sensor head 302 includes a temperature sensor 304, a pressure sensor 306, and a airflow sensor 308.

The probe 110 can be mounted on the drying hopper 12 so that the sensor head 302 is positioned within the interior volume 20 of the drying hopper 12, and thus is exposed to the process air within the interior volume 20.

The probe 300 further includes a humidity (dew point) sensor 310. The sensor head 302 has an air inlet passage 314 formed therein to place the humidity sensor 310 in fluid communication with the interior volume 20 of the drying hopper 12. The humidity sensor 310 requires a condensation chamber 317, shown in FIG. 11, to provide repeatable and accurate readings. The condensation chamber 317 is located within a metal enclosure 318 located outside of the drying hopper 12. The enclosure 318 includes a heat sink in the form of cooling fins 320. A fan 322 directs ambient air over the fins 320 to dissipate heat from the enclosure 318.

The temperature sensor 304, pressure sensor 306, airflow sensor 308, humidity sensor 310, and barometer 312 can be communicatively coupled to the controller 102, and can provide the controller 102 with the data corresponding to the temperature, pressure, airflow, and humidity (dew point) of the process air within the internal volume 20 of the drying hopper 12, and at the location of the sensor head 302 within the internal volume. Multiple probes 300 can be mounted on the drying hopper 12, so that the temperature, pressure, airflow, and humidity readings can be obtained at different levels within the interior volume 20 as discussed above in relation to the probe 110. The barometer 316 is communicatively coupled to the controller 102, and provides the controller 102 with data corresponding to the pressure differential between the internal volume 20 and the local barometric pressure.

The controller 102 can be configured to adjust one or more of the operating parameters of the drying hopper 12 to maintain a desired, or targeted, vertical profile in the granulate moisture content, based on the direct or indirect moisture-content measurements provided by the probe 110 (or the probes 300).

The targeted vertical profile for the granulate moisture content can be determined before the drying operation. In particular, a curve of the targeted moisture content vs. drying time can be developed for the drying process based on manufacturer-supplied data regarding the drying characteristics of the granulates (including the recommended drying temperature); the known drying characteristics of the drying hopper (including the recommended dew point and flow rate of the process air provided by the hopper manufacturer); and the residence time adjusted for the initial moisture content of the resin granulates.

An individual targeted drying curve can be generated for each level within the interior volume 20 at which the sensors 114, 116 are located. The individual drying curves collectively define the targeted profile of the moisture content of the resin granulates as a function of the vertical position of the resin granulates within the interior volume 20, and the time over which the resin granulates have been subjected to the drying process.

During operation, the drying hopper 12 initially can be filled with the resin granulates to a level based on the manufacturer's suggested residence time for the particular type of resin granulates being dried, the throughput of the drying hopper 12, and the bulk density of the granulates. The moisture content of the resin granulates being loaded in the drying hopper 12 can be measured by the moisture sensor 15 positioned in the receiver 30. The controller 102 can modify the desired residence time of the resin granulates based on the moisture level as measured by the moisture sensor 15. More specifically, the controller 102 can be configured to increase the residence time from the manufacturer's recommendation if the as-measured moisture content is above a predetermined baseline level. Conversely, the controller 102 can be configured to decrease the residence time from the manufacturer's recommendation if the as-measured moisture content is below the baseline level.

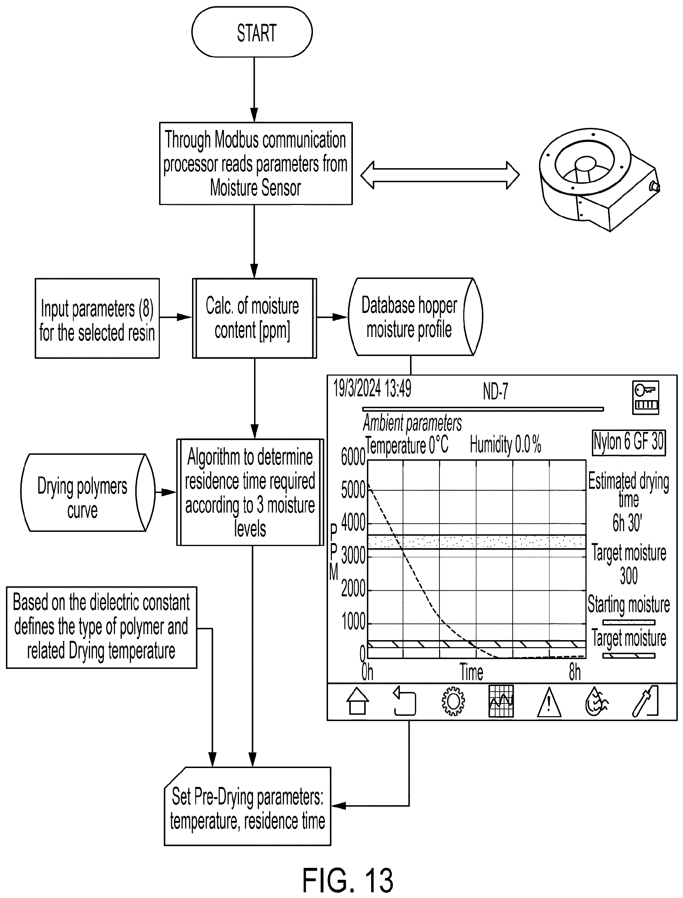

In some embodiments the controller 102 can be configured to set the drying parameters and residence time based on the as-measured moisture content of the resin granulates, in accordance with the process depicted in FIG. 13.

The temperature, dew point, and flow rate of the process air initially can be set to the predetermined levels used to formulate the targeted drying profile as discussed above. Once the flow of process air to the interior volume 20 of the drying hopper has commenced, the controller 102 compares the actual vertical profile of the granulate moisture content, as determined directly or indirectly from the sensor data acquired at the various vertical positions within the drying hopper 12, to the predetermined targeted profile for a given time in the drying process.

If the average actual moisture content profile differs by more than a predetermined amount from the targeted moisture content profile, the controller 102 can adjust one or more of the operating parameters of the drying hopper 12 to maintain the targeted profile in the actual granulate moisture content.

If necessary, the actual drying profile can be adjusted, for example, by varying the dew point of the process air being supplied to the hopper 20. Specifically, if the actual moisture content of the resin granulates is greater than targeted at a given time in the drying process, i.e., if the resin granulates are drying more slowly than expected, the dew point of the process air can be lowered to increase the rate at which moisture is being removed from the resin granulates. Conversely, if the actual moisture content of the resin granulates less than targeted at a given time in the drying process, i.e., if the resin granulates are drying more quickly than expected, the dew point of the process air can be raised to decrease the rate at which moisture is being removed from the resin granulates.

Alternatively, or in addition, the actual drying profile can be adjusted by varying the flow rate and/or the temperature of the process air as needed to increase or decrease the rate at which moisture is being removed from the resin granulates. If the targeted drying profile cannot be achieved by varying the above-noted operating parameters, the residence time of the resin granulates can be increased or decreased so that the resin granulates have the targeted moisture content upon exiting the drying hopper 20.

The controller 102 can be configured to determine the actual moisture content of the resin granulates on a real-time, continuous basis, using the above-noted direct or indirect measurement techniques. Adjustments in the operating parameters of the drying hopper 12, if needed, can be made at intervals frequent enough to help ensure that there is sufficient time for the adjustments to have the desired corrective effect by the time the resin granulates are discharged from the drying hopper 12. The system 10 optionally can be provided with an alarm that is activated by the controller 102 if the deviation between the actual and targeted moisture-content profiles exceeds a predetermined level.

Maintaining a desired vertical profile in the granulate moisture content within the interior volume 20 of the drying hopper 12 can help ensure that the resin granulates are properly dried upon leaving the drying hopper 12. In particular, the sensors 114, 116 are located far enough from the exit of the drying hopper 12 to permit the operating parameters of the drying hopper 12 to be adjusted while there is still an opportunity to effect a change in the moisture content of the resin granulates by the time the resin granulates reach the exit of the drying hopper 12.

Thus, because the data provided by the sensors 114, 116 provide a real-time indication of the actual moisture content of the resin granulates inside of the drying hopper 12, i.e., downstream of the entrance to the interior volume 20 and upstream of the exit of the drying hopper 12, the system 10 can automatically regulate the performance of the drying hopper 12 to guarantee a desired result, i.e., a desired moisture level in the granulates leaving the drying hopper 12.

By contrast, measuring the granulate moisture content at the exit of the drying hopper 12 can result in over-dried or under-dried resin granulates, because the drying process for the resin granulates exiting the drying hopper 12 already has been completed and, therefore, no corrective action can be taken for those resin granulates. Over-dried granulates may need to be discarded, or ground into smaller particles and combined with virgin resin. At a minimum, over-drying of the resin granulates results in excessive energy usage. Under-dried granulates typically need to be subjected to another drying cycle to bring the moisture content within specification. If a molded product part or product was made from the under-dried granulates, the part or product typically needs to be ground to prevent a potentially defective part or product from reaching the end user. Thus, the ability to monitor the drying process within the drying hopper 12 on a real-time basis using a sensor array such as the probe 110, and the resulting ability of the system 10 to adjust the operating parameters prospectively, before the resin granulates reach the exit of the drying hopper 12, can help avoid over-dried and under-dried resin granulates, and the waste, productions inefficiencies, and product defects associated with over-dried and under-dried resin granulates.

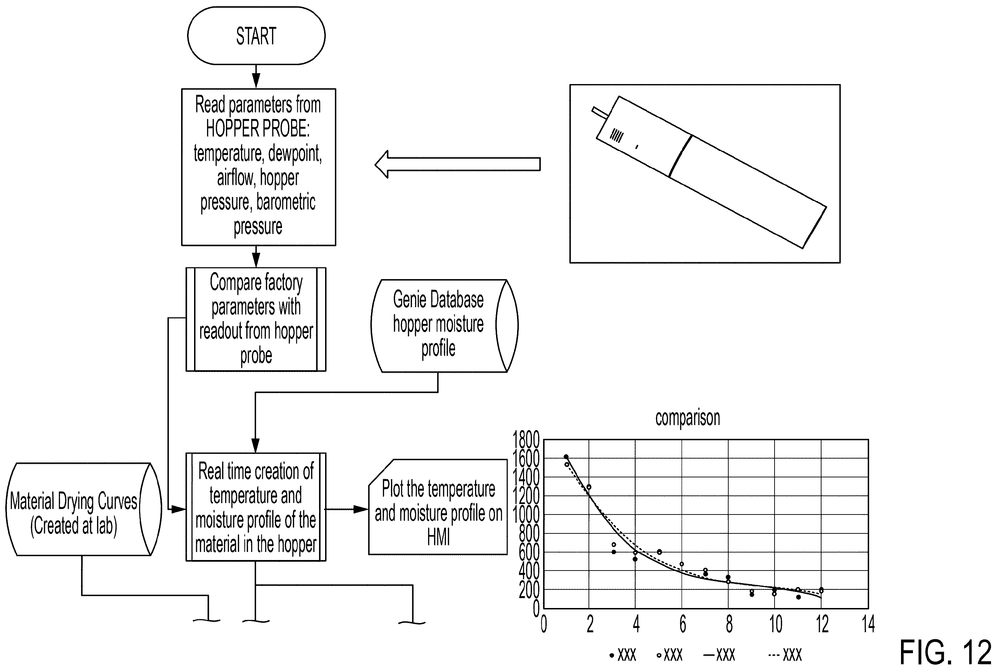

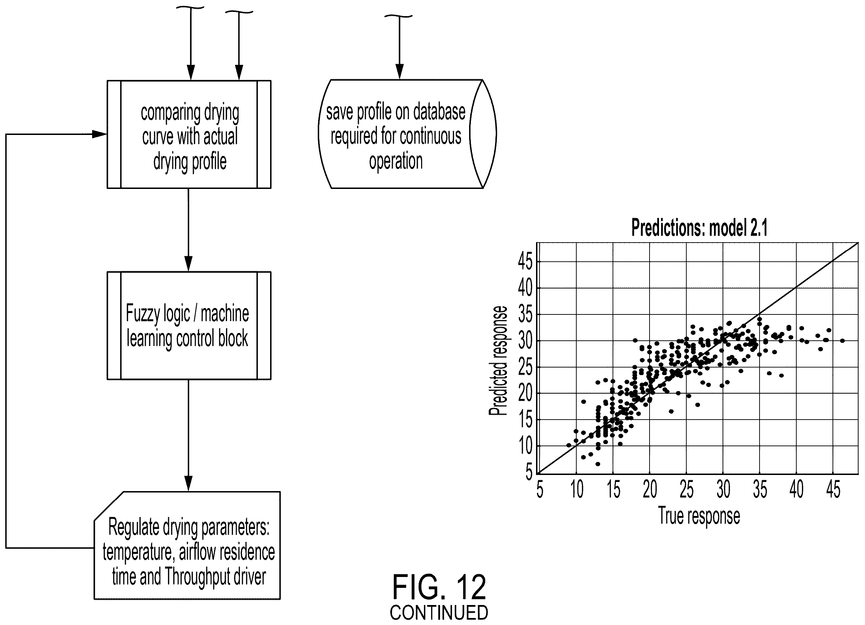

In some embodiments, the drying process can be regulated in accordance with the process depicted in FIG. 12.

Although the present solution has been illustrated and described with respect to one or more implementations, equivalent alterations and modifications will occur to others skilled in the art upon the reading and understanding of this specification and the annexed drawings. In addition, while a particular feature of the present solution may have been disclosed with respect to only one of several implementations, such feature may be combined with one or more other features of the other implementations as may be desired and advantageous for any given or particular application. Thus, the breadth and scope of the present solution should not be limited by any of the above described embodiments. Rather, the scope of the present solution should be defined in accordance with the following claims and their equivalents.

**Claims**

1. A sensor for measuring the moisture content of a granular material, comprising:

   a sensing unit defining a sensing volume for holding the granular material and configured to generate an output relating to the moisture content of the granular material within the sensing volume; and
   a vibration generator configured to vibrate the granular material within the sensing volume.

2. The sensor of claim 1, wherein the vibration generator is configured to compact the granular material within the sensing volume by reducing inter-granular voids within the granular material within the sensing volume.

3. The sensor of claim 1, wherein the vibration generator is configured to increase a bulk density of the granular material within the sensing volume.

4. The sensor of any preceding claim, wherein:

   the vibration generator includes a motor, and an eccentric weight connected to the motor; and
   the motor is configured to rotate the eccentric weight.

5. The sensor of any preceding claim, wherein the sensing unit is configured to transmit the vibrations to the granular material within the sensing volume.

6. The sensor of claim 5, wherein the vibration generator is located within the sensing unit.

7. The sensor of any preceding claim, further comprising a weighing device configured to weigh the granular material within the sensing volume.

8. The sensor of any preceding claim, wherein:

the sensing unit includes a first electrode, and a second electrode located concentrically within the first electrode;
the first and second electrodes define an annulus located between the first and second electrodes; and
the annulus is the sensing volume.

9. The sensor of claim 8, wherein the vibration generator is located within the second electrode.

10. The sensor of claim 8 or 9, further comprising a support member, wherein:

    the first and second electrodes each have a generally cylindrical configuration; and
    the second electrode is mechanically connected to and supported by the first electrode via the support member.

11. The sensor of claims 8 to 10, wherein the sensing unit further includes:

    an oscillator circuit electrically coupled to the first and second electrodes and configured to generate a high-frequency alternating-current (AC) signal;
    a detection circuit electrically coupled to the first and second electrodes and configured to generate an output relating to a capacitance of the sensing unit; and
    an output circuit communicatively coupled to the detection circuit and configured to generate a signal indicative of the capacitance of the sensing unit.

12. A system for drying a granular material, comprising:

    a drying hopper defining an interior volume configured to hold a granular material, an air inlet configured to facilitate the passage of dehumidified air into the interior volume, an entrance opening configured to facilitate entry of the granular material into the interior volume, and an exit; and
    a moisture sensor as claimed in any one of claims 1 to 11 configured to measure the moisture content of the granular material.

13. The system of claim 12, wherein the moisture sensor is configured to measure the moisture content of the granular material upstream of the entrance opening of the drying hopper.

14. The system of claim 12 or 13, further comprising a controller communicatively coupled to the moisture sensor and configured to vary one or more of a temperature of the dehumidified air supplied to the interior volume, a humidity of the dehumidified air supplied to the interior volume, a flow-rate of the dehumidified air supplied to the interior volume, and a residence time of the granular material with the drying hopper, based on the measured moisture content of the granular material.

15. A method for determining moisture content of a sample of granular material, comprising:

providing a moisture sensor as claimed in any one of claims 1 to 11;
placing the sample in proximity to the moisture sensor so that the moisture sensor generates an output relating to the moisture content of the sample;
measuring a weight of the sample;
calculating a bulk density of the sample based on a volume of the sample and the measured weight of the sample; and
calculating the moisture content of the sample based at least in part on the output of the moisture sensor and the calculated bulk density of the sample.

FIG. 1

FIG. 2

FIG. 3

FIG. 4

FIG. 5

FIG. 6

FIG. 7

FIG. 8

FIG. 9

90

Sensing Device

FIG. 9A

308

300

304

306
Pressure
sensor

314
Air inlet for
dewpoint sensor

302

FIG. 10

Condensation
Chamber
Humidity            317   Heat Sink   Fan
sensor    PCB                 320      322
310

Air from
hopper

318

FIG. 11

FIG. 12

comparison

START → Read parameters from HOPPER PROBE: temperature, dewpoint, airflow, hopper pressure, barometric pressure → Compare factory parameters with readout from hopper probe → Real time creation of temperature and moisture profile of the material in the hopper → Plot the temperature and moisture profile on HMI

Genie Database hopper moisture profile

Material Drying Curves (Created at lab)

···XXX   —XXX   ○XXX   •XXX

Predictions: model 2.1

FIG. 12
CONTINUED

save profile on database required for continuous operation

comparing drying curve with actual drying profile

Fuzzy logic / machine learning control block

Regulate drying parameters: temperature, airflow residence time and Throughput driver

START

Through Modbus communication processor reads parameters from Moisture Sensor

⟺

Input parameters (8) for the selected resin → Calc. of moisture content [ppm] → Database hopper moisture profile

Drying polymers curve → Algorithm to determine residence time required according to 3 moisture levels

Based on the dielectric constant defines the type of polymer and related Drying temperature

19/3/2024 13:49    ND-7

Ambient parameters
Temperature 0°C    Humidity 0.0%

Nylon 6 GF 30

6000
5000
P 4000
P
M 3000
2000
1000
0
0h        Time        8h

Estimated drying time
6h 30'

Target moisture
300

Starting moisture

Target moisture

Set Pre-Drying parameters: temperature, residence time

# FIG. 13

Europäisches
Patentamt

European
Patent Office

Office européen
des brevets

# EUROPEAN SEARCH REPORT

**Application Number**

EP 25 21 7983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 403 191 A (SATAKE TOSHIHIKO [JP]) 6 September 1983 (1983-09-06) | 1-5,7,15 | INV. G01N27/04 |
| Y | * figures 1, 2 * | 8,10-14 | G01N27/22 |
| A | * column 3, line 6 - line 32 * | 9 | B29B9/16 |
| | ----- | | B29B13/06 |
| X | JP S57 33347 A (KANEKO AGRICULT MACHINERY) 23 February 1982 (1982-02-23) * the whole document * | 1-6 | |
| | ----- | | |
| Y | WO 2024/167932 A1 (NOVATEC INC [US]) 15 August 2024 (2024-08-15) * figure 10 * * paragraph [0049] - paragraph [0051] * * paragraph [0096] - paragraph [0101] * | 8,10,11 | |
| | ----- | | |
| Y | US 2024/263874 A1 (BESSEMER CONRAD [US] ET AL) 8 August 2024 (2024-08-08) * paragraph [0082] - paragraph [0085] * * paragraph [0086] - paragraph [0097] * | 12-14 | |
| | ----- | | |

**TECHNICAL FIELDS SEARCHED (IPC)**

G01N
A21C
B29B
F26B

The present search report has been drawn up for all claims

| Place of search | Date of completion of the search | Examiner |
|---|---|---|
| Munich | 16 March 2026 | Knoll, Stephan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 21 7983

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | | Publication date | Patent family member(s) | | Publication date |
|---|---|---|---|---|---|
| US 4403191 | A | 06-09-1983 | AU | 529790 B2 | 23-06-1983 |
| | | | DK | 64981 A | 15-08-1981 |
| | | | EP | 0034459 A2 | 26-08-1981 |
| | | | JP | S6312254 B2 | 18-03-1988 |
| | | | JP | S56114748 A | 09-09-1981 |
| | | | US | 4403191 A | 06-09-1983 |
| JP S5733347 | A | 23-02-1982 | JP | S5733347 A | 23-02-1982 |
| | | | JP | S6218013 B2 | 21-04-1987 |
| WO 2024167932 | A1 | 15-08-2024 | EP | 4662041 A1 | 17-12-2025 |
| | | | US | 2024345015 A1 | 17-10-2024 |
| | | | WO | 2024167932 A1 | 15-08-2024 |
| US 2024263874 | A1 | 08-08-2024 | CA | 3267848 A1 | 21-03-2024 |
| | | | CN | 120569279 A | 29-08-2025 |
| | | | EP | 4587245 A1 | 23-07-2025 |
| | | | US | 2024263874 A1 | 08-08-2024 |
| | | | WO | 2024059784 A1 | 21-03-2024 |

EPO FORM P0459

For more details about this annex : see Official Journal of the European Patent Office, No. 12/82